(19) Europäisches Patentamt
European Patent Office
Office européen des brevets

(11) EP 3 480 651 B1

# (12) EUROPEAN PATENT SPECIFICATION

(45) Date of publication and mention of the grant of the patent:
**13.09.2023 Bulletin 2023/37**

(21) Application number: **17820352.7**

(22) Date of filing: **30.06.2017**

(51) International Patent Classification (IPC):
***G02C 7/12*** (2006.01) ***G02B 5/30*** (2006.01)
***G02C 7/10*** (2006.01)

(52) Cooperative Patent Classification (CPC):
**G02C 7/12; G02B 5/3025; G02C 7/102**

(86) International application number:
**PCT/JP2017/024247**

(87) International publication number:
**WO 2018/003998 (04.01.2018 Gazette 2018/01)**

## (54) SPECTACLE LENS AND SPECTACLES

BRILLENGLAS UND BRILLE

VERRE DE LUNETTES ET LUNETTES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2016 JP 2016131090**

(43) Date of publication of application:
**08.05.2019 Bulletin 2019/19**

(73) Proprietor: **Hoya Lens Thailand Ltd.**
**Pathumthani 12130 (TH)**

(72) Inventors:
- **GOTO, Takumi**
  **Tokyo 160-8347 (JP)**
- **INABA, Tsuyoshi**
  **Tokyo 160-8347 (JP)**

(74) Representative: **Hoffmann Eitle**
**Patent- und Rechtsanwälte PartmbB**
**Arabellastraße 30**
**81925 München (DE)**

(56) References cited:
**EP-A1- 2 808 711**
**JP-A- 2012 032 507**
**JP-A- 2012 226 026**
**JP-A- 2013 156 354**
**JP-A- 2013 178 490**
**JP-B2- 5 938 282**
**JP-U- 3 144 374**
**JP-U- 3 144 374**
**US-A1- 2005 151 926**
**US-A1- 2011 143 141**
**US-A1- 2011 268 874**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 480 651 B1

## Description

[Technical field]

The present invention relates to a method for producing a spectacle lens.

[Background Art]

A technique of coating a coating liquid including a dichroic pigment on a lens substrate to form a polarizing layer (JP-B-5555688) and a technique of forming a lens substrate layer on the front and back surfaces of a polarizing film by insert molding (JP-A-2015-069045) have been disclosed as techniques for imparting a polarizing function to a spectacle lens.

The polarizing layer and the polarizing film each have a function of a polarizing filter, and as the degree of polarization increases, miscellaneous light is cut out and a clear view is obtained.

EP-A-2 808 711 describes a method of manufacturing a polarizing lens, which comprises forming a polarizing layer comprising a dichroic dye on a lens substrate; and conducting an epoxysilane treatment to impregnate the polarizing layer with an epoxy group-containing silane coupling agent such that a rate of increase in a film thickness of the polarizing layer by the epoxysilane treatment is ≥ 8%.

US-A-2005/151926 relates to ophthalmic elements and devices comprising a coating adapted to polarize transmitted radiation on an exterior surface of the ophthalmic element or substrate, which coating comprises a partially aligned dichroic material. Also disclosed is a method of making these ophthalmic elements and devices.

JP-A-2012-032507 discloses polarized glasses with high dichroic ratio and transparency, wherein the polarized glasses are provided with watching components for both right and left eyes that have transparent substrates (10L, 10R) and light absorption anisotropic films (14L, 14R) made by fixing liquid crystalline compositions including at least one dichroic dye in an oriented state on the substrates.

[Summary of Invention]

[Technical Problem]

However, with the conventional technique in which a polarizing layer is formed by coating a coating liquid including a dichroic pigment on a lens substrate as in JP-B-5555688, the luminous transmittance of a spectacle lens tends to decrease (that is, the lens density of the spectacle lens tends to increase) as the degree of polarization is increased.

In addition, in order to form a lens substrate layer on the front and rear surfaces of a polarizing film as described in JP-A-2015-069045, a manufacturing method is usually used in which a peripheral edge of a polarizing film which has been pressure-molded in advance in a hemispherical shape is held on the inner peripheral side of a ring-shaped gasket having the same diameter as the lens substrate, a pair of concave and convex molds for molding lens surfaces are integrally fixed to the gasket at a predetermined interval from the front and rear surfaces of the polarizing film, a monomer is injected into a void (cavity) which sets the lens thickness between the pair of molds, the monomer is kept at a required temperature for a required time to undergo polymerization reaction, and the cured resin and the polarizing element are integrally molded. The problems associated with this technique are that it takes time to cure the resin and, therefore, the time from order receipt to delivery is long, large restrictions (e.g. drilling is impossible, or large-scale processing is impossible) are placed on spectacle lens processing after resin curing in order to avoid damage to the polarizing film, and the degree of freedom of frame selection is low.

An object of the present invention disclosure is to provide a spectacle lens provided with a satisfactory degree of polarization from the perspective of ability to suppress glare, as well as with high luminous transmittance, the spectacle lens having a high degree of freedom of frame selection relative to the prior art and enabling the reduction of the turnaround time from order receipt to delivery.

[Solution to Problem]

The present invention provides a method for producing a spectacle lens which

- has a degree of polarization of 10-60% and a luminous transmittance of > 75%, and
- comprises a lens substrate and a dichroic pigment coating layer directly on the lens substrate or on the lens substrate via another layer,

wherein the dichroic pigment layer is formed by spin coating onto a rubbed surface a coating liquid wherein the content of the dichroic pigment is 0.04-0.35 mass%.

Preferred embodiments of the invention are as defined in the appended dependent claims.

[Advantageous Effects of Invention]

According to the invention, there is provided a method for producing a spectacle lens provided with a satisfactory degree of polarization from the perspective of ability to suppress glare, as well as with high luminous transmittance. Furthermore, the spectacle lens and spectacles have a high degree of freedom of frame selection and enable the reduction of the turnaround time from order receipt to delivery.

[Description of Embodiments]

Hereinafter, preferred embodiments of the present disclosure will be described in detail.

The present invention relates to a method for producing a spectacle lens, wherein the spectacle lens produced

- has a degree of polarization of 10-60% and a luminous transmittance of > 75%, and
- comprises a lens substrate and a dichroic pigment coating layer directly on the lens substrate or on the lens substrate via another layer.

This configuration will be described hereinbelow in greater detail.

<Dichroic Pigment Coating Layer>

The dichroic pigment coating layer is formed, for example, by coating a coating liquid including a dichroic pigment on a lens substrate by a known method such as a spin coating method. The polarizing property of the dichroic pigment is usually expressed mainly by uniaxial orientation of the dichroic pigment. In order to uniaxially orient the dichroic pigment, it is preferable to subject the surface to be coated with the coating liquid including the dichroic pigment to rubbing treatment.

(Dichroic Pigment)

"Dichroic", as referred to herein, means a property that the color of transmitted light varies depending on the direction of propagation because the medium has anisotropy of selective absorption for light, and the dichroic pigment has a property that light absorption becomes strong in a certain direction in which the pigment molecule is present with respect to the polarized light, and light absorption becomes small in the direction orthogonal thereto. Further, among the dichroic pigments, those that develop a liquid crystal state in a certain concentration-temperature range when water is used as a solvent are known. Such a liquid crystal state is called a lyotropic liquid crystal. Where the pigment molecules can be aligned in a specific direction by using the liquid crystal state of the dichroic pigment, it becomes possible to develop stronger dichroism. A dichroic pigment can be uniaxially oriented by coating a coating liquid including the dichroic pigment on the rubbed surface, whereby a polarizing film having good polarization property can be formed. The dichroic pigment is not particularly limited, and various dichroic pigments ordinarily used for a polarizing member such as a polarizing lens can be exemplified. Specific examples thereof include azo, anthraquinone, merocyanine, styryl, azomethine, quinone, quinophthalone, perylene, indigo, tetrazine, stilbene, and benzidine pigments. Pigments described in US 2,400,877 (Specification) and PCT Application No. 2002-527786 may be used. For example, materials including a combination of polychromatic pigment molecules and a molecular matrix having lyotropic liquid crystallinity and orienting and holding the polychromatic pigment molecules in a predetermined direction may be used.

To obtain a high degree of polarization, the coating liquid is preferably an aqueous coating liquid including a dichroic pigment. The coating liquid may be a solution or a suspension, but a solution is preferred.

The "aqueous coating liquid", as referred to herein, means a liquid including a solvent including water as a main component. The content of water is preferably 60-100 mass%, more preferably 75-100 mass%, and still more preferably 90-100 mass% in the solvent of the coating liquid.

The content of the dichroic pigment in the coating liquid is 0.04-0.35 mass%, preferably 0.1-0.3 mass%, and more preferably 0.2-0.3 mass%. By setting the content of the dichroic pigment in such a range, it is possible to obtain a spectacle lens having a high degree of polarization while having high luminous transmittance. Further, variations in luminous transmittance and degree of polarization of the obtained spectacle lens can be reduced.

The aqueous coating liquid for forming the dichroic pigment coating layer may include other components in addition to the dichroic pigment. As other components, pigments other than dichroic pigments can be mentioned, and

by blending such pigments, a dichroic pigment-coated layer having a desired hue can be formed. Additives such as a rheology modifier, an adhesion promoter, a plasticizer, a leveling agent and the like may be blended, if necessary, from the viewpoint of e.g. further improving coatability.

<Rubbing Treatment>

The "rubbing treatment", as referred to herein, is a treatment of imparting orientation to the surface of a workpiece. The "rubbed surface", as referred to herein, is the surface subjected to the rubbing treatment. Examples of the rubbing treatment include physical methods of imparting orientation by rotating, on the surface to be treated, a roll in which nylon fibers are implanted on the surface or a roll having a rubbing cloth mounted to the surface, and chemical methods of imparting orientation by irradiating with high-energy light such as UV.
The rubbing treatment may be directly performed on the surface of a lens substrate or a hard coat layer, but from the viewpoint of better manifesting the polarization property of the dichroic pigment, the rubbing treatment is preferably performed on the surface of the alignment layer described hereinbelow.

(Lens Substrate)

The rubbed surface on which the dichroic pigment coating layer is to be formed is formed directly on the lens substrate or indirectly via another layer.
As the lens substrate, various kinds of lens substrates commonly used for spectacle lenses such as a plastic lens substrate and a glass lens substrate can be used without any limitation. From the viewpoints of light weight and resistance to cracking, the lens substrate is preferably a plastic lens substrate. Specific examples of resins for forming the plastic lens substrate include, but are not limited to, styrene resins including (meth)acrylic resins, polycarbonate resins, allyl resins, allyl carbonate resins such as diethylene glycol bisallyl carbonate resin (CR-39), vinyl resins, polyester resins, polyether resins, urethane resins obtained by reacting an isocyanate compound with a hydroxy compound such as diethylene glycol, thiourethane resins obtained by reacting an isocyanate compound with a polythiol compound, and transparent resins obtained by curing a polymerizable composition including a (thio)epoxy compound having one or more disulfide bonds in a molecule. Lens substrates which have not been dyed (colorless lenses) may be used, or those which have been dyed (dyed lens) may be used. The refractive index of the lens substrate is, for example, about 1.60-1.75. However, the refractive index of the lens substrate is not limited to this range and may fall within the range or be above or below the range.
The spectacle lens can be of various types, and examples include a single focus lens, a multifocal lens and a progressive power lens. The type of the lens is determined by the surface shape of both sides of the lens substrate. In addition, the lens substrate surface may be any of a convex surface, a concave surface, and a flat surface. In ordinary lens substrates and spectacle lenses, the object-side surface is a convex surface and the eyeball-side surface is a concave surface. However, the present disclosure is not limited to this configuration. From the viewpoint of better exerting the polarization property of the dichroic pigment coating layer, it is preferable that the surface on which the below-described dichroic pigment coating layer it to be provided be the convex surface of the lens substrate.
A dichroic pigment coating layer is formed directly or indirectly via another layer on the lens substrate. The other layer formed herein can be exemplified by a hard coat layer. By providing the hard coat layer, scratch resistance (abrasion resistance) can be imparted to the spectacle lens and the durability (strength) of the spectacle lens can also be enhanced. More specifically, materials suitable for the hard coat layer are exemplified by an acrylic resin, a melamine resin, a urethane resin, an epoxy resin, a polyvinyl acetal resin, an amino resin, a polyester resin, a polyamide resin, a vinyl alcohol resin, a styrene resin, a silicone resin, and mixtures or copolymers thereof. An example of the hard coat layer is a silicone resin. For example, the hard coat layer can be formed by coating a coating composition including metal oxide fine particles and an organosilicon compound by e.g. a dipping method, a spinner method, a spray method or a flow method, and then heating at a temperature of 40-200°C for several hours, followed by drying and curing. The coating composition may include components such as organosilicon compounds and metal oxide particles which will be described hereinbelow. Note that some lens substrates are commercially available with a hard coat layer attached thereto, and such a lens substrate may also be used in the spectacle lens according to the present disclosure. Further, as the above-mentioned other layer can be also exemplified by the below-described alignment layer.

(Alignment Layer)

The alignment layer is provided for orienting the dichroic pigment. The alignment layer is usually provided directly on the lens substrate surface or indirectly via another layer. A layer that can be formed between the lens substrate and the alignment layer can be exemplified by the hard coat layer described hereinabove. The thickness of the alignment layer is usually 0.02-5 μm, preferably 0.05-0.5 μm. The alignment layer may be formed by depositing a film forming

material by a known film forming method such as vapor deposition or stappering, or may be formed by a known coating method such as a dipping method or a spin coating method. Suitable examples of the film-forming material include inorganic oxides, and more specifically, metals, semimetals, oxides, complexes or compounds thereof. Among them, from the viewpoint of easiness of imparting functionality as an alignment layer, silicon oxides such as SiO and $SiO_2$ are preferable, and among them, from the viewpoint of reactivity with a silane coupling agent which will be described hereinbelow, $SiO_2$ is more preferable. Meanwhile, an alignment layer formed by a coating method can be exemplified by a sol-gel film including an inorganic oxide sol. Examples of a coating liquid suitable for forming the sol-gel film is a coating liquid including an alkoxysilane and/or a hexaalkoxydisiloxane. Examples of the alkoxysilane include tetraalkoxysilane such as tetraethoxysilane, tetramethoxysilane and tetraisopropoxysilane; and alkyltrialkoxysilanes such as methyltrimethoxysilane, methyltriethoxysilane and methyltriisopropoxysilane. Examples of the hexaalkoxydisiloxane include hexaethoxydisiloxane and xamethoxydisiloxane.

<Formation of Dichroic Pigment Coating Layer>

(Application of Coating Solution)

When the coating liquid is coated by a spin coating method, the rotation speed at the time of coating is preferably 200-600 rpm, more preferably 250-500 rpm, further preferably 285-450 rpm. The holding time at this rotation speed is set to 40-50 sec.

Spin coating can be performed, for example, by placing a lens substrate having a rubbed surface in a spin coater.

The coating liquid may be supplied to, for example, the geometric center portion of the rotating lens substrate. Further, the coating may be performed by moving the coating liquid horizontally on a rotating lens substrate along a straight line connecting the geometric center portion and the peripheral portion of the lens substrate, so that the coating liquid supply point draws a spiral locus on the lens substrate.

At the start of supplying the coating liquid (at the time of liquid discharge), the rotation is performed for about 8 sec at a rotation speed lower than the rotation speed at the time of coating in order to prevent the applied coating liquid from being repelled by the rubbed surface on the lens substrate.

After holding for 40-50 sec at 200-600 rpm, the coating liquid is shaken off, preferably, by increasing the rotation speed to about 1000 rpm and rotating at this speed for about 12 sec.

The thickness of the dichroic pigment coating layer is usually 0.05-5 $\mu$m, but it is not particularly limited. The below-described silane coupling agent usually penetrates into the dichroic pigment coating layer and is substantially contained in the dichroic pigment coating layer.

(Water-Insolubilization Treatment)

When a water-soluble pigment is used as the dichroic pigment, in order to enhance the film stability, it is preferable that water-insolubilization treatment be performed after the coating liquid has been coated and dried. The water-insolubilization treatment can be performed, for example, by ion-exchanging the terminal hydroxyl group of the molecule of the dichroic pigment or by creating a chelate state between the dichroic pigment and a metal ion. For that purpose, it is preferable to use a method of immersing the formed dichroic pigment coating layer in a metal salt aqueous solution. The metal salt is not particularly limited, and examples thereof include $AlCl_3$, $BaCl_2$, $CdCl_2$, $ZnCl_2$, $FeCl_2$, $SnCl_3$. After the water-insolubilization treatment, the surface of the dichroic pigment coating layer may be further dried.

(Immobilization Treatment)

The dichroic pigment coating layer is preferably to be performed immobilization treatment of the dichroic pigment in order to enhance film strength and film stability. In the immobilization treatment, it is desirable to carry out the treatment after the water-insolubilization treatment. By the immobilization treatment, it is possible to immobilize the alignment state of the dichroic pigment in the dichroic pigment coating layer.

(Silane Coupling Agent Treatment)

The immobilization treatment is preferably performed by treating the surface of the dichroic pigment coating layer with a silane coupling agent. The silane coupling agent treatment can be performed, for example, by applying a silane coupling agent solution having a concentration of 1-15 mass%, preferably 1-10 mass%, to the surface of the dichroic pigment coating layer. The solvent used for preparing the above solution is preferably an aqueous solvent, more preferably water, or a mixed solvent of water and alcohol (such as methanol and ethanol), and more preferably water. In the present disclosure, the aqueous solvent is assumed to refer to a solvent including at least water. The aqueous

solvent is preferably a liquid including a solvent including water as a main component. The content of water is preferably 60-100 mass%, more preferably 75-100 mass%, and still more preferably 90-100 mass% in the aqueous medium.

The solvent can be applied by known means such as a dipping method, a spin coating method or a spray method. By allowing the member including the lens substrate and the dichroic pigment coating layer to stay for a predetermined time in e.g. a heating furnace during the immobilization treatment, the immobilization effect can be further enhanced. The environment temperature in the furnace can be determined according to the type of the silane coupling agent to be used, and is usually room temperature to 120°C, preferably 40-100°C, and more preferably 50-80°C. The standing time is usually 5 min to 3 h.

As the silane coupling agent, an epoxysilane (epoxy group-containing silane coupling agent) and an aminosilane (amino group-containing silane coupling agent) are preferable. From the viewpoint of the immobilization effect, it is preferable to perform silane coupling treatment (epoxysilane treatment) by coating at least the epoxy group-containing silane coupling agent solution on the surface of the dichroic pigment coating layer, and it is further preferable to coat an amino group-containing silane coupling agent (aminosilane treatment) and then perform the epoxysilane treatment. This is apparently because due to the molecular structure thereof, an aminosilane is more easily interposed between the molecules of uniaxially oriented dichroic pigment, as compared with an epoxysilane.

The silane coupling agent generally has a structure represented by $R\text{-}Si(OR')_3$ (plural R' may be the same or different).

The functional group represented by R is usually an organic functional group, and the epoxysilane (epoxy group-containing silane coupling agent) includes an epoxy group in the functional group represented by R. The epoxy group is usually bonded to Si via a divalent linking group. The divalent linking group can be exemplified by a linking group contained in a specific example compound described hereinbelow.

Meanwhile, the functional group represented by R' is usually an alkyl group, which undergoes hydrolysis in an aqueous solvent to produce silanol (Si-OH). The number of carbon atoms in the alkyl group represented by R' is, for example, 1-10, preferably 1-3.

Specific examples of epoxysilanes include glycidoxy group-containing trialkoxysilanes such as γ-glycidoxypropyltrimethoxysilane (y-GPS) and γ-glycidoxypropylmethyldiethoxysilane; epoxyalkylalkoxysilanes such as β-(3,4-epoxycyclohexyl)ethyltrimethoxysilane, β-(3,4-epoxycyclohexyl)ethyltriethoxysilane, β-(3,4-epoxycyclohexyl)ethyltripropoxysilane, β-(3,4-epoxycyclohexyl)ethyltributoxysilane, γ-(3,4-epoxycyclohexyl)propyltrimethoxysilane, γ-(3,4-epoxycyclohexyl)propyltriethoxysilane, δ-(3,4-epoxycyclohexyl)butyltrimethoxysilane, and δ-(3,4-epoxycyclohexyl)butyltriethoxysilane; and amino group-containing alkoxysilanes such as N-(β-aminoethyl)-γ-aminopropyltrimethoxysilane, N-(β-aminoethyl)-γ-aminopropylmethyldimethoxysilane, γ-aminopropylmethyldimethoxysilane, γ-aminopropylmethyldiethoxysilane, γ-aminopropyltrimethoxysilane, γ-aminopropyltriethoxysilane, N-(β-aminoethyl)-γ-aminopropylmethyldimethoxysilane, and N-(β-aminoethyl)-γ-aminopropylmethyldiethoxysilane.

The silane coupling agents may be used singly or in combination of two or more thereof. The silane coupling agent excessively attached to the outermost surface can be removed by rinsing, with e.g. pure water or deionized water, the surface of the dichroic pigment coating layer after the application of the silane coupling agent. A member including the dichroic pigment coating layer after applying the silane coupling agent can be subjected to heat treatment. The heat treatment can be performed, for example, by disposing the member in a furnace having a furnace temperature of 45-145°C, and preferably 50-90°C.

<Formation of Functional Layer>

The present spectacle lens may have the dichroic pigment coating layer as the outermost layer on the object-side surface, but it is preferable that one or more functional layers be further provided on a layer more distant from the lens substrate than the dichroic pigment coating layer (that is, positioned on the object side). Two or more such functional layers may be provided. Examples of the optional functional layer include various functional layers such as a well-known hard coat layer, a water repellent layer, and an antireflection layer (multilayer antireflection film). As an example, the hard coat layer will be described below.

(Hard Coat Layer)

From the viewpoint of improving the durability of the spectacle lens and achieving optical characteristics at the same time, it is preferable that the hard coat layer have a thickness of 0.5-10 μm. From the viewpoint of improving the durability of the spectacle lens, it is preferable that the hard coat layer include an organosilicon compound and metal oxide particles.

As a preferred embodiment of the organosilicon compound, an organosilicon compound of formula (I) or a hydrolyzate thereof can also be mentioned.

$$(R^1)_a(R^3)_bSi(OR^2)_{4-(a+b)} \qquad (I)$$

wherein $R^1$ is an organic group having a group selected from glycidoxy, epoxy, vinyl, methacryloxy, acryloxy, mercapto, amino and phenyl; $R^2$ is $C_{1-4}$-alkyl, $C_{1-4}$-acyl or $C_{6-10}$-aryl; $R^3$ is $C_{1-6}$-alkyl or $C_{6-10}$-aryl; a and b each are 0 or 1.

The $C_{1-4}$-alkyl group represented by $R^2$ is a linear or branched, and specific examples thereof include methyl, ethyl, propyl and butyl.

The $C_{1-4}$-acyl group represented by $R^2$ is exemplified by acetyl, propionyl, oleyl and benzoyl.

The $C_{6-10}$-aryl group represented by $R^2$ is exemplified by phenyl, xylyl and tolyl.

The $C_{1-6}$-alkyl group represented by $R^3$ is a linear or branched, and specific examples thereof include methyl, ethyl, propyl, butyl, pentyl and hexyl.

Specific examples of the compound of formula (I) include methyl silicate, ethyl silicate, n-propyl silicate, i-propyl silicate, n-butyl silicate, sec-butyl silicate, t-butyl silicate tetraacetoxysilane, methyltrimethoxysilane, methyltriethoxysilane, methyltripropoxysilane, methyltriacetoxysilane, methyltributoxysilane, methyltripropoxysilane, methyltriamyloxysilane, methyltriphenoxysilane, methyltribenzyloxysilane, methyltriphenethyloxysilane, glycidoxymethyltrimethoxysilane, glycidoxymethyltriethoxysilane, α-glycidoxyethyltriethoxysilane, β-glycidoxyethyltrimethoxysilane, β-glycidoxyethyltriethoxysilane, α-glycidoxypropyltrimethoxysilane, α-glycidoxypropyltriethoxysilane, β-glycidoxypropyltrimethoxysilane, β-glycidoxypropyltriethoxysilane, γ-glycidoxypropyltrimethoxysilane, γ-glycidoxypropyltriethoxysilane, γ-glycidoxypropyltripropoxysilane, γ-glycidoxypropyltributoxysilane, γ-glycidoxypropyltriphenoxysilane, α-glycidoxybutyltrimethoxysilane, α-glycidoxybutyltriethoxysilane, β-glycidoxybutyltrimethoxysilane, β-glycidoxybutyltriethoxysilane, γ-glycidoxybutyltrimethoxysilane, γ-glycidoxybutyltriethoxysilane, δ-glycidoxybutyltrimethoxysilane, δ-glycidoxybutyltriethoxysilane, (3,4-epoxycyclohexyl)methyltrimethoxysilane, (3,4-epoxycyclohexyl)methyltriethoxysilane, β-(3,4-epoxycyclohexyl)ethyltrimethoxysilane, β-(3,4-epoxycyclohexyl)ethyltriethoxysilane, β-(3,4-epoxycyclohexyl)ethyltripropoxysilane, β-(3,4-epoxycyclohexyl)ethyltributoxysilane, β-(3,4-epoxycyclohexyl)ethyltriphenoxysilane, γ-(3,4-epoxycyclohexyl)propyltrimethoxysilane, γ-(3,4-epoxycyclohexyl)propyltriethoxysilane, δ-(3,4-epoxycyclohexyl)butyltrimethoxysilane, δ-(3,4-epoxycyclohexyl)butyltriethoxysilane, glycidoxymethylmethyldimethoxysilane, glycidoxymethylmethyldiethoxysilane, α-glycidoxyethylmethyldimethoxysilane, α-glycidoxyethylmethyldiethoxysilane, β-glycidoxyethylmethyldimethoxysilane, β-glycidoxyethylmethyldiethoxysilane, α-glycidoxypropylmethyldimethoxysilane, α-glycidoxypropylmethyldiethoxysilane, β-glycidoxypropylmethyldimethoxysilane, β-glycidoxypropylmethyldiethoxysilane, γ-glycidoxypropylmethyldimethoxysilane, γ-glycidoxypropylmethyldiethoxysilane, γ-glycidoxypropylmethyldipropoxysilane, γ-glycidoxypropylmethyldibutoxysilane, γ-glycidoxypropylmethyldiphenoxysilane, γ-glycidoxypropylethyldimethoxysilane, γ-glycidoxypropylethyldiethoxysilane, γ-glycidoxypropylvinyldimethoxysilane, γ-glycidoxypropylvinyldiethoxysilane, γ-glycidoxypropylphenyldimethoxysilane, γ-glycidoxypropylphenyldiethoxysilane, ethyltrimethoxysilane, ethyltriethoxysilane, vinyltrimethoxysilane, vinyltriacetoxysilane, vinyltrimethoxyethoxysilane, phenyltrimethoxysilane, phenyltriethoxysilane, phenyltriacetoxysilane, γ-chloropropyltrimethoxysilane, γ-chloropropyltriethoxysilane, γ-chloropropyltriacetoxysilane, 3,3,3-trifluoropropyltrimethoxysilane, γ-methacryloxypropyltrimethoxysilane, γ-mercaptopropyltrimethoxysilane, γ-mercaptopropyltriethoxysilane, β-cyanoethyltriethoxysilane, chloromethyltrimethoxysilane, chloromethyltriethoxysilane, N-(β-aminoethyl) γ-aminopropyltrimethoxysilane, N-(β-aminoethyl) γ-aminopropylmethyldimethoxysilane, γ-aminopropylmethyldimethoxysilane, N-(β-aminoethyl) γ-aminopropyltriethoxysilane, N-(β-aminoethyl) γ-aminopropylmethyldiethoxysilane, dimethyldimethoxysilane, phenylmethyldimethoxysilane, dimethyldiethoxysilane, phenylmethyldiethoxysilane, γ-chloropropylmethyldimethoxysilane, γ-chloropropylmethyldiethoxysilane, dimethyldiacetoxysilane, γ-methacryloxypropylmethyldimethoxysilane, γ-methacryloxypropylmethyldiethoxysilane, γ-mercaptopropylmethyldimethoxysilane, γ-mercaptopropylmethyldiethoxysilane, methylvinyldimethoxysilane and methylvinyldiethoxysilane. Since the organosilicon compound of formula (I) has a curable group, it is possible to form a hard coat layer as a cured layer by performing curing after coating.

The metal oxide particles contained in the hard coat layer can contribute to adjustment of the refractive index and increase in hardness of the hard coat layer. Specific examples include particles of tungsten oxide ($WO_3$), zinc oxide ($ZnO$), silicon oxide ($SiO_2$), aluminum oxide ($Al_2O_3$), titanium oxide ($TiO_2$), zirconium oxide ($ZrO_2$), tin oxide ($SnO_2$), beryllium oxide ($BeO$), and antimony oxide ($Sb_2O_5$), and metal oxide particles can be used singly or in combination of two or more thereof. From the viewpoint of achieving both scratch resistance and optical properties, the particle size of the metal oxide particles is preferably 5-30 nm. For the same reason, the content of the metal oxide particles in the hard coat layer can be appropriately set in consideration of the refractive index and hardness, but this content is usually 5-80 mass% based on the solid content of the hard coat composition. Further, from the viewpoint of dispersibility in the hard coat layer, the metal oxide particles are preferably colloidal particles.

The hard coat layer is formed by coating a hard coat composition prepared by mixing the above-mentioned components and, if necessary, optional components such as an organic solvent and a surfactant (leveling agent), on the surface to be coated, and performing curing treatment (e.g. light irradiation and heating) corresponding to the curable groups. In the embodiment where the hard coat composition is cured by heating, the heating temperature (atmosphere temperature at which the heat treatment is performed) is preferably $< 100°C$, and preferably $\leq 95°C$. The heating temperature is, for example, ≥ 80°C, but may be set according to the type of the curable compound, and may be < 80°C. As a means for coating the hard coat composition, usual methods such as a dipping method, a spin coating method and a spray method can be used.

<Order of Layering>

In the present spectacle lens, such as described hereinabove, the order of layering the layers is not particularly limited. In one mode of the present embodiment, a dichroic pigment coating layer is included as a layer closer to the lens substrate.

In the spectacle lens, it is preferable that the lens substrate, the dichroic pigment coating layer, and the hard coat layer are layered in this order, and it is more preferable that the lens substrate, the hard coat layer, the aligning layer, the dichroic pigment coating layer, and the hard coat layer layered in this order. Where the above-mentioned layers are present on at least one surface side of the lens substrate, sufficient functions can be exhibited.

The luminous transmittance of the spectacle lens is > 75%, preferably > 80%. By making the luminous transmittance > 75%, it is possible to obtain a spectacle lens suitable for night driving. In recent years, a demand for spectacle lenses capable of suppressing glare during night driving is increasing, but a luminous transmittance of ≥ 75% is needed to realize the "spectacle lens for night driving". The upper limit of the luminous transmittance is not particularly limited, but is, for example, ≤ 99%, preferably ≤ 98%, more preferably ≤ 95%, and still more preferably ≤ 90%.

The luminous transmittance is measured by the method described in the examples.

The degree of polarization of the spectacle lens is 10-60%, preferably 10-50%, more preferably 10-40%, still more preferably 10-30%, and even more preferably 15-20%. Where the degree of polarization is made 10%, the user wearing spectacles using the spectacle lens can recognize the polarization performance to a greater extent.

The degree of polarization is measured by the method described in the examples.

In the embodiment described above, a method for manufacturing a so-called "polarizing lens" formed by laminating a dichroic pigment coating layer on the surface of a lens substrate, among spectacle lenses, has been described. However, in the present further embodiment, a method for producing a so-called "polarizing and dimming lens" having a dichroic pigment coating layer and a photochromic layer directly or via another layer on a lens substrate is described.

Where the above-mentioned layers are present on at least one surface side of the lens substrate, sufficient functions can be exhibited.

Features relating to the <Dichroic Pigment Coating Layer>, <Rubbing Treatment>, <Formation of Dichroic Pigment Coating Layer>, and <Formation of Functional Layer> are the same as those in the above-described embodiment and the explanation thereof is herein omitted

<Order of Layering>

In the present spectacle lens, the order of layering is not particularly limited. In the present embodiment, the dichroic pigment coating layer and the photochromic layer are layered via an intermediate layer. In one mode, the dichroic pigment coating layer is included as a layer located closer to the lens substrate, that is, the lens substrate, the dichroic pigment coating layer, the intermediate layer, and the photochromic layer are layered in this order. In another mode, a photochromic layer is included as a layer located closer to a lens substrate, that is, the lens substrate, the photochromic layer, the intermediate layer, and the dichroic pigment coating layer are layered in this order. From the viewpoint of the response speed of coloring/fading of the photochromic layer, it is preferable that the photochromic layer be included as a layer located close to the object side (light incidence side). From this viewpoint, the former mode (the lens substrate, the dichroic pigment coating layer, the intermediate layer, and the photochromic layer are layered in this order) is preferable. Further, it is preferable that the interface of the dichroic pigment coating layer on the intermediate layer side be a surface subjected to a silane coupling agent treatment. Furthermore, a functional layer may be further provided on the photochromic layer. Where the above-mentioned layers are present on at least one surface side of the lens substrate, sufficient functions can be exhibited.

<Formation of Photochromic Layer>

In one embodiment, a photochromic layer including a photochromic pigment is further formed as an upper layer or a lower layer of the polarizing layer. The lower layer means a layer nearer to the lens substrate, and the upper layer means a layer farther from the lens substrate.

The photochromic layer is preferably layered on the dichroic pigment coating layer via an intermediate layer described hereinbelow.

(Photochromic Pigment)

The photochromic layer includes at least a photochromic pigment. As the photochromic pigment, for example, a photochromic compound such as a fulgimide compound, a spirooxazine compound or a chromene compound can be used without any limitation. Among these photochromic compounds, the chromene compound is particularly preferably used because the durability of the photochromic characteristic is higher than in other photochromic compounds and the increase in coloring density and fading rate of the photochromic characteristic is particularly high as compared with other photochromic compounds. Further, even among the chromene compounds, the compounds having a molecular weight of $\geq 540$ can be particularly advantageously used since the increase in coloring density and fading rate of the photochromic characteristic is especially high as compared with other chromene compounds. A plurality of kinds of photochromic compounds can be used by appropriately mixing two or more kinds thereof in order to develop an appropriate color tone.

Among the chromene compounds, the chromene compounds having the following structures are preferred.

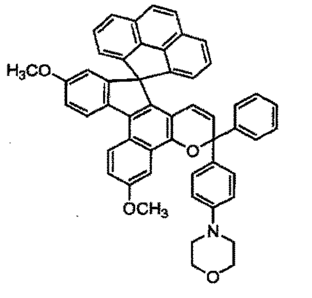

,

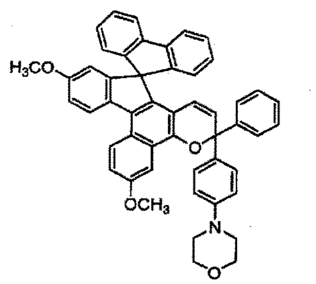

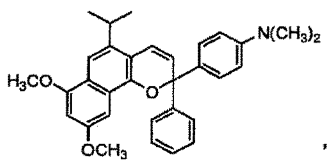

,

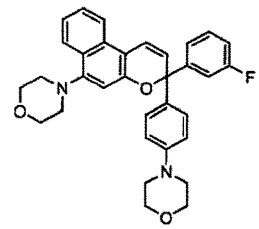

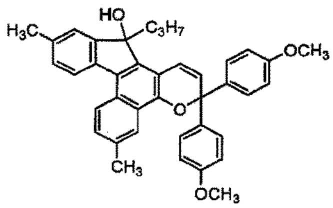

,

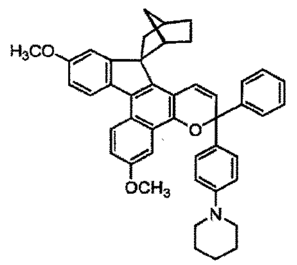

The photochromic layer can preferably be formed by coating, on the intermediate layer, a curable composition (curable composition for forming a photochromic layer) including a photochromic pigment including a photochromic pigment, and curing the composition. The curable composition refers to a composition including at least a curable compound. The curable composition for forming a photochromic layer can include the photochromic pigment preferably at 0.01-20 parts by mass (pbm), more preferably 0.1-10 pbm, based on 100 pbm of the curable compound.

(Curable Compound)

The curable compound may be a compound having a property of being cured (polymerized) by a curing treatment such as light irradiation or heating. Acrylic compounds are preferable from the viewpoints of easy availability and good curability, and compounds having a radically polymerizable group selected from (meth)acryloyl groups and (meth)acryloyloxy groups are more preferred. Incidentally, (meth)acryloyl represents both acryloyl and methacryloyl, and (meth)acryloyloxy represents both acryloyloxy and methacryloyloxy.

To improve the properties of cured products such as the ease of hardness adjustment, solvent resistance and hardness after film formation, and heat resistance, or photochromic properties such as coloring density and fading rate,

it is more preferably to use, as the curable compound, a combination of a monomer exhibiting an L-scale Rockwell hardness of ≥ 60 as a homopolymer (hereinafter sometimes referred to as high-hardness monomer) and a monomer exhibiting an L-scale Rockwell hardness of ≤ 40 as a homopolymer (hereinafter sometimes referred to as low-hardness monomer). The L-scale Rockwell hardness means the hardness measured in accordance with JIS B 7726. By performing such a measurement on a homopolymer of each monomer, it can be easily determined whether or not the hardness condition is satisfied. Specifically, the confirmation can be easily made by polymerizing the monomer to obtain a cured product having a thickness of 2 mm, keeping the cured product for 1 day in a room at 25°C, and then measuring the L-scale Rockwell hardness by using a Rockwell hardness tester. The polymer to be used for measuring the L-scale Rockwell hardness is obtained by cast polymerization under the condition that ≥ 90% of the polymerizable groups of the charged monomer are polymerized. The L-scale Rockwell hardness of the cured product polymerized under such conditions is measured as an almost constant value. The high-hardness monomer has an effect of improving the solvent resistance, hardness and heat resistance of the cured product after curing. To make this effect more effective, a curable compound with an L-scale Rockwell hardness of a homopolymer of 65-130 is preferable. Such a high-hardness monomer is usually a compound having 2-15, preferably 2-6 radically polymerizable groups.

Specific examples of the high hardness monomer include trimethylolpropane trimethacrylate, trimethylolpropane triacrylate, tetramethylolmethane trimethacrylate, tetramethylolmethane triacrylate, trimethylolpropane trimethacrylate, tetramethylolmethane tetramethacrylate, tetramethylolmethane tetraacrylate, trimethylolpropane triethylene glycol trimethacrylate, trimethylolpropane triethylene glycol triacrylate, ethoxylated pentaerythritol tetraacrylate, ethoxylated pentaerythritol tetramethacrylate, pentaerythritol trimethacrylate, pentaerythritol tetramethacrylate, dipentaerythritol hexaacrylate, urethane oligomer tetraacrylate, urethane oligomer hexamethacrylate, urethane oligomer hexaacrylate, polyester oligomer hexaacrylate, caprolatatone-modified dipentaerythritol hexaacrylate and ditrimethylolpropane tetraacrylate.

Specific examples of the high-hardness monomer include tetrafunctional polyester oligomers having a molecular weight of 2500-3500 (e.g. Daicel-UCB Company, Ltd., EB80), tetrafunctional polyester oligomers having a molecular weight of 6000-8000 (e.g. Daicel-UCB Company, Ltd., EB450), hexafunctional polyester oligomers having a molecular weight of 45,000-55,000 (e.g. Daicel-UCB Company, Ltd., EB1830) and tetrafunctional polyester oligomers having a molecular weight of 10,000 (e.g. DKS Co. Ltd., GX8488B).

Specific examples of the high-hardness monomer include bisphenol A dimethacrylate, 2,2-bis(4-methacryloyloxyethoxyphenyl)propane and 2,2-bis(3,5-dibromo-4-methacryloyloxyethoxyphenyl)propane.

Specific examples of the high-hardness monomer also include ethylene glycol diacrylate, ethylene glycol dimethacrylate, 1,4-butylene glycol dimethacrylate, 1,9-nonylene glycol dimethacrylate, neopentylene glycol dimethacrylate and neopentylene glycol diacrylate.

Specific examples of the high-hardness monomer also include diethylene glycol dimethacrylate, triethylene glycol dimethacrylate, tetraethylene glycol dimethacrylate, tripropylene glycol dimethacrylate and tetrapropylene glycol dimethacrylate.

Specific examples of the high-hardness monomer also include bisphenol A diglycidyl methacrylate, ethylene glycol bisglycidyl methacrylate and glycidyl methacrylate. Depending on the combination of substituents, even the above-mentioned compounds can have an L-scale Rockwell hardness of the homopolymer of < 60, but in such a case, these compounds are classified into low-hardness monomers or medium-hardness monomers.

To strengthen the cured product and to improve the fading rate of the photochromic compound, the curable compound includes a low-hardness monomer. Specific examples of the low-hardness monomer include alkylene glycol di(meth)acrylates such as trialkylene glycol diacrylates, tetraalkylene glycol diacrylates, nonaalkylene glycol diacrylates and nonaalkylene glycol dimethacrylates.

Specific examples of the low-hardness monomer also include 2,2-bis(4-acryloyloxypolyethylene glycol phenyl)propane having an average molecular weight ($MW_{AV}$) of 776. Specific examples of the low-hardness monomer also include polyalkylene glycol (meth)acrylates such as polyethylene glycol methacrylate having a $MW_{AV}$ of 526 or 360, methyl ether polyethylene glycol methacrylate having a $MW_{AV}$ of 475 or 1000, polypropylene glycol methacrylate having a $MW_{AV}$ of 375, polypropylene methacrylate having a $MW_{AV}$ of 430 or 622, methyl ether polypropylene glycol methacrylate having a $MW_{AV}$ of 620, polytetramethylene glycol methacrylate having a $MW_{AV}$ of 566, octylphenyl ether polyethylene glycol methacrylate having a $MW_{AV}$ of 2034, nonyl ether polyethylene glycol methacrylate having a $MW_{AV}$ of 610, methyl ether polyethylene thioglycol methacrylate having a $MW_{AV}$ of 640 and perfluoroheptyl ethylene glycol methacrylate having a $MW_{AV}$ of 498. Specific examples of the low-hardness monomer also include stearyl methacrylate, lauryl methacrylate, ethylhexyl methacrylate, methyl acrylate, ethyl acrylate, butyl acrylate and lauryl acrylate. Among these low-hardness monomers, methyl ether polyethylene glycol methacrylate having a $MW_{AV}$ of 475 or 1000, trialkylene glycol diacrylates, tetraalkylene glycol diacrylates, nonaalkylene glycol diacrylates, methyl acrylate, ethyl acrylate, butyl acrylate, and lauryl acrylate are particularly preferred.

Depending on the combination of substituents, even the above-mentioned compounds can have an L-scale Rockwell hardness of the homopolymer of ≥ 40, but in such a case, these compounds are classified into the above-described high-hardness monomers or the below-described medium-hardness monomers. Examples of monomers which are neither high-hardness monomers nor low-hardness monomers, that is, monomers for which the L-scale Rockwell hardness of the individual cured product is > 40 and < 60 (hereinafter sometimes referred to as medium-hardness monomers), include: bifunctional (meth)acrylates such as polytetramethylene glycol dimethacrylate having a $MW_{AV}$ of 650, polytetramethylene glycol dimethacrylate having a $MW_{AV}$ of 1400 and bis(2-methacryloyloxyethylthioethyl)sulfide; polyallyl compounds such as diallyl phthalate, diallyl isophthalate, diallyl tartrate, epoxy diallyl succinate, diallyl fumarate, diallyl chlorendate, diallyl hexaphthalate and allyl diglycol carbonate; polythioacrylic acid and polythiomethacrylic acid ester compounds such as 1,2-bis(methacryloylthio)ethane, bis(2-acryloylthioethyl)ether and 1,4-bis(methacryloylthiomethyl)benzene; unsaturated carboxylic acids such as acrylic acid, methacrylic acid and maleic anhydride; acrylic acid and methacrylic acid ester compounds such as methyl methacrylate, butyl methacrylate, benzyl methacrylate, phenyl methacrylate, 2-hydroxyethyl methacrylate and biphenyl methacrylate; fumaric acid ester compounds such as diethyl fumarate and diphenyl fumarate; thioacrylic acid and thiomethacrylic acid ester compounds such as methyl thioacrylate, benzyl thioacrylate and benzyl thiomethacrylate; vinyl compounds such as styrene, chlorostyrene, methyl styrene, vinyl naphthalene, $\alpha$-methyl styrene dimer, bromostyrene, divinylbenzene and vinyl pyrrolidone; and radically polymerizable monofunctional monomers such as (meth)acrylates with 6-25 carbon atoms in a hydrocarbon chains having an unsaturated bond in a molecule, such as oleyl methacrylate, nerol methacrylate, geraniol methacrylate, linalool methacrylate and farnesol methacrylate. These medium-hardness monomers can also be used, and high-hardness monomers, low-hardness monomers and medium-hardness monomers can be used in a suitable mixture thereof. To improve the balance of cured product properties such as solvent resistance, hardness and heat resistance of the cured product of the curable composition, or the photochromic properties such as coloring density and fading rate, it is preferable that the content of the low-hardness monomer be 5-70 mass% and the content of the high-hardness monomer be 5-95 mass% in the curable composition for forming a photochromic layer. Further, it is particularly preferable that a monomer having three or more radically polymerizable groups be compounded, as a high-hardness monomer to be compounded, at ≥ 5 mass% among other curable compounds.

(Polymerization Initiator)

A curable composition for forming a photochromic layer usually includes a polymerization initiator. Depending on the polymerization method, the polymerization initiator can be appropriately selected from known photopolymerization initiators and thermal polymerization initiators. The photopolymerization initiator is not particularly limited, and examples thereof include benzoin, benzoin methyl ether, benzoin butyl ether, benzophenol, acetophenone, 4,4'-dichlorobenzophenone, diethoxyacetophenone, 2-hydroxy-2-methyl-1-phenylpropane-1-one, benzyl methyl ketal, 1-(4-isopropylphenyl)-2-hydroxy-2-methylpropane-1-one, 1-hydroxycyclohexylphenyl ketone, 2-isopropyl thioxanthone, bis(2,6-dimethoxybenzoyl-2,4,4-trimethyl)pentylphosphine oxide, bis(2,4,6-trimethylbenzoyl)phenylphosphine oxide, 2,4,6-trimethylbenzoyldiphenylphosphine oxide and 2-benzyl-2-dimethylamino-1-(4-morpholinophenyl)-butanone-1. The preferred among them are 1-hydroxycyclohexylphenyl ketone, 2-isopropyl thioxanthone, bis(2,6-dimethoxybenzoyl)-2,4,4-trimethylpentylphosphine oxide, bis(2,4,6-trimethylbenzoyl)phenylphosphine oxide, and 2,4,6-trimethylbenzoyldiphenylphosphine oxide. A plurality of these photopolymerization initiators can be used in a suitable mixture thereof. The amount of the photopolymerization initiator to be blended with respect to the total amount of the curable composition for forming a photochromic layer is usually 0.001-5 pbm, preferably 0.1-1 pbm, per 100 pbm of the curable compound.

When the photochromic layer is formed by thermal polymerization, examples of suitable thermal polymerization initiators include: diacyl peroxides such as benzoyl peroxide, p-chlorobenzoyl peroxide, decanoyl peroxide, lauroyl peroxide and acetyl peroxide; peroxyesters such as t-butyl peroxy-2-ethylhexanoate, t-butyl peroxydicarbonate, cumyl peroxyneodecanate and t-butyl peroxybenzoate; percarbonates such as diisopropyl peroxydicarbonate, di-2-ethylhexyl peroxydicarbonate and di-sec-butyloxycarbonate; and azo compound such as 2,2'-azobisisobutyronitrile, 2,2'-azobis(4-dimethylvaleronitrile), 2,2'-azobis(2-methylbutyronitrile) and 1,1-azobis(cyclohexane-1-carbonitrile). The amount of the thermal polymerization initiator to be used varies depending on the polymerization conditions, the kind of the initiator, and the kind and composition of the curable compound, but is usually 0.01-10 pbm based on 100 pbm of the curable compound. The thermal polymerization initiators may be used singly or as a mixture of a plurality thereof.

(Additives)

To improve the durability of the photochromic pigment, increase the coloring rate, improve the fading rate, and improve the formability, the curable composition for forming a photochromic layer may further include an additive such as a surfactant, an antioxidant, a radical scavenger, a UV stabilizer, an ultraviolet absorber, a release agent, a discoloration inhibitor, an antistatic agent, a fluorescent dye, a dye, a pigment, a perfume and a plasticizer. As such additives, known compounds can be used without any limitation.

As the surfactant, any of nonionic, anionic, and cationic surfactants can be used, but from the viewpoint of

solubility in curable compounds, nonionic surfactants are preferably used. Specific examples of suitable nonionic surfactants include sorbitan fatty acid esters, glycerin fatty acid esters, decaglycerin fatty acid esters, propylene glycol pentaerythritol fatty acid esters, polyoxyethylene sorbitan fatty acid esters, polyoxyethylene sorbitol fatty acid esters, polyoxyethylene glycerin fatty acid esters, polyethylene glycol fatty acid esters, polyoxyethylene alkyl ethers, polyoxyethylene phytosterol - phytostanol, polyoxyethylene polyoxypropylene alkyl ether, polyoxyethylene alkyl phenyl ether, polyoxyethylene castor oil - hydrogenated castor oil, polyoxyethylene lanolin - lanolin alcohol - beeswax derivative, polyoxyethylene alkylamine - fatty acid amides, polyoxyethylene alkylphenyl formaldehyde condensate and single-chain polyoxyethylene alkyl ethers. When using the surfactant, two or more kinds of surfactants may be used as a mixture thereof. The addition amount of the surfactant is preferably 0.1-20 pbm with respect to 100 pbm of the curable compound.

Examples of suitable antioxidant, radical scavenger, ultraviolet stabilizer and ultraviolet absorber include a hindered amine light stabilizer, a hindered phenol antioxidant, a phenolic radical scavenger, a sulfur-containing antioxidant, a benzotriazole compound, and a benzophenone compound. These antioxidants, radical scavengers, ultraviolet stabilizers, and ultraviolet absorbers may be used in a mixture of two or more kinds thereof. Further, in using these non-polymerizable compounds, an antioxidant, a radical scavenger, a UV stabilizer, and an ultraviolet absorbers may be used in combination with a surfactant. The amount of these antioxidant, radical scavenger, ultraviolet stabilizer, and ultraviolet absorber is preferably 0.001-20 pbm per 100 pbm of the curable compound. A known problem associated with polymeric materials is that under the presence of oxygen, oxidation-induced degradation is triggered by energy such as ultraviolet rays and heat due to the following mechanism. First, when a polymer compound is exposed to high energy such as UV irradiation, radicals are generated in the polymer. Then, these radicals serve as starting points for the generation of new radicals and peroxides. Since peroxides are generally unstable, they are easily decomposed by heat and light, and create new radicals. Thus, once oxidation starts, oxidation proceeds sequentially in a chain manner, so that the polymer material deteriorates and functional deterioration is brought about. To prevent oxidation caused by such a mechanism, (1) a method of deactivating the generated radicals and (2) a method of decomposing the generated peroxide into harmless substances and preventing generation of new radicals can be considered. Therefore, as an antioxidant for a polymeric material, it is conceivable to use either a compound having radical scavenging ability (radical scavenger) to prevent oxidation by the above method (1), or a compound having peroxide decomposing ability (peroxide decomposing agent) to prevent oxidation by the above method (2). Thus, a compound having radical scavenging ability or a compound having peroxide decomposing ability may be used as the antioxidant, but it is preferred that a compound having radical scavenging ability be used as the antioxidant. Photochromic compounds absorb ultraviolet rays from sunlight, and the molecular structure thereof changes causing coloration, whereas the absorption of heat or visible light returns the compound to the original state thereof. Where oxygen is present in the path of this change, energy transfer to oxygen occurs, and oxygen radicals with strong oxidizing power are generated. Therefore, by scavenging such oxygen radicals with a compound having radical scavenging ability, it is possible to effectively prevent oxidation in the photochromic layer. Further, since the addition of a radical scavenger can suppress the progress of radical polymerization, the addition of a radical scavenger is also effective in terms of forming a flexible photochromic layer. From the above viewpoint, preferable additives include hindered amine compounds and hindered phenol compounds. Since the above-mentioned compounds can exert radical scavenging ability, they can contribute to the formation of a flexible photochromic layer and can prevent oxidation of the obtained photochromic layer and improve durability. Further, by adding a hindered amine compound or a hindered phenol compound, it is possible to prevent deterioration of the photochromic pigment during curing. As the hindered amine compound and the hindered phenol compound, known compounds can be used without any limitation. Among the hindered amine compounds, compounds exhibiting the effect of preventing deterioration of photochromic pigments, especially when used for coating, can be exemplified by bis(1,2,2,6,6-pentamethyl-4-piperidyl) sebacate, ADK STAB LA-52, LA-62, LA-77 and LA-82 (Asahi Denka Co., Ltd.). As a preferable hindered phenol compound, for example, dibutyl hydroxytoluene (BHT) can be mentioned. The addition amount thereof is, for example, 0.001-20 pbm, preferably 0.1-10 pbm, and more preferably 1-5 pbm relative to 100 pbm of the curable compound. Various additives such as the above-described compounds having radical scavenging ability can be added to the curable composition for forming a photochromic layer, but it is also possible to add such additives by e.g. impregnation treatment after forming the photochromic layer. In this case, it is preferable to impregnate the compound having radical scavenging ability from the surface on the object side. It is preferable to include e.g. a surfactant or a leveling agent in the curable composition for forming a photochromic layer, in order to improve the uniformity at the time of film formation, and it is particularly preferable that a silicone-fluorine type leveling agent having a leveling property be added. The addition amount thereof is not particularly limited, but it is usually 0.01-1.0 mass%, preferably 0.05-0.5 mass%, based on the total amount of the curable composition for forming a photochromic layer.

A preferable additive can be exemplified by a pyridine ring-containing compound which is an additive capable of improving the durability of the photochromic layer by preventing the oxidation thereof. From the viewpoint of further improving the durability of the pyridine ring-containing compound and the photochromic layer, it is preferable to use a hindered amine. Here, the hindered amine is a compound having the following structure in a molecule:

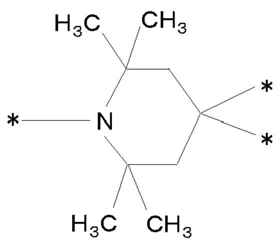

this structure being bonded to an atom such as a hydrogen atom or another structure at positions represented by *. The hindered amine may be a polymer including the abovementioned structure in one or both of the main chain and the side chain. Regardless of whether the piperidine ring-containing compound is a hindered amine or not, the compound may be a polymer including a piperidine ring in one or both of the main chain and the side chain. Also, the piperidine ring contained may be substituted by a substituent such as an alkyl group as in the abovementioned structure.

The molecular weight of the piperidine ring-containing compound is not particularly limited, but it may be, for example, ≤ 4000, and can be < 1000 in one embodiment and ≥ 1000 in another embodiment, and further may be, for example, ≥ 100, but may be < 100. The molecular weight refers to the weight average molecular weight determined by gel permeation chromatography (GPC) in terms of polystyrene or the molecular weight distribution within the above range for a polymer (multimer). Further, the average molecular weight described in this description refers to the weight average molecular weight determined as described above.

The piperidine ring-containing compound is contained in an amount of 0.001-20 pbm, preferably 0.1-10 pbm, and more preferably 1-5 pbm, based on 100 pbm of the curable compound in the curable composition for forming a photochromic layer. The piperidine ring-containing compound may be added only to the curable composition for forming a photochromic layer or may be added to the below described composition for forming a function layer, without adding to the curable composition for forming a photochromic layer, or may be added to both compositions.

The photochromic layer can be formed by coating a curable composition for forming a photochromic layer which includes the above-described components on the surface of an intermediate layer and curing the composition. The method for preparing the curable composition for forming a photochromic layer is not particularly limited and can be performed by weighing and mixing predetermined amounts of the components. The order of addition of the components is not particularly limited, and all components may be added at the same time and mixed. The curable composition for forming a photochromic layer preferably has a viscosity at 25°C of 20-500 mPa·S, more preferably 50-300 mPa·S, and particularly preferably 60-200 mPa·S. With this viscosity range, the curable composition for forming a photochromic layer is ready to be coated, and a photochromic layer having a desired thickness can be easily obtained. Coating of the curable composition for forming a photochromic layer can be performed by a known coating method such as a spin coating method.

After coating the curable composition for forming a photochromic layer on the intermediate layer, curing treatment (e.g. light irradiation and heating) corresponding to the kind of the curable compound contained in the composition is performed, thereby making it possible to form a photochromic layer and impart a dimming function to the spectacle lens. The curing treatment can be performed by a known method. From the viewpoint of satisfactorily exhibiting photochromic properties, the thickness of the photochromic layer is preferably ≥ 10 μm, and more preferably 20-60 μm.

<Formation of Intermediate Layer>

The intermediate layer is formed between the dichroic pigment coating layer and the photochromic layer to enhance the durability of the photochromic layer.

The intermediate layer is preferably a layer including at least a resin. The resin is preferably an aqueous resin. In the present description, the term "aqueous resin" refers to a resin having a property of solidifying at least when an aqueous coating liquid (aqueous resin composition) including the resin and an aqueous solvent is dried. The layer formed by drying and solidifying the aqueous resin composition is an aqueous resin layer.

The aqueous solvent contained in the aqueous resin composition is, for example, water or a mixture of water and a polar solvent, and preferably water. From the viewpoint of liquid stability and film forming property, it is preferable that the solid content concentration of the aqueous resin composition be 1-62 mass%, and more preferably 5-38 mass%. In addition to the aqueous resin, the aqueous resin composition may include, if necessary, additives such as an antioxidant, a dispersant and a plasticizer. Further, a commercially available aqueous resin composition diluted with a solvent such as water, alcohol or propylene glycol monomethyl ether be used.

The aqueous resin composition may include the aqueous resin in a state of being dissolved or dispersed as fine particles (preferably colloidal particles) in an aqueous solvent. Among the aqueous resin compositions, the desirable one is a dispersion in which the aqueous resin is dispersed as fine particles in an aqueous solvent (preferably in water). In this case, from the viewpoint of the dispersion stability of the composition, it is preferable that the particles of the

aqueous resin have a diameter of ≤ 0.3 μm. Further, from the viewpoint of stability, it is preferable that the pH of the aqueous resin composition be 5.5-9.0 at 25°C. From the viewpoint of coating suitability, it is preferable that the viscosity at 25°C be 5-500 mPa·S, and more preferably 10-50 mPa·S.

Examples of the aqueous resin include an aqueous polyurethane resin, an aqueous acrylic resin and an aqueous epoxy resin, and from the viewpoint of more effectively preventing or reducing peeling between the dichroic pigment coating layer and the photochromic layer, an aqueous polyurethane resin is preferred. That is, the intermediate layer is preferably an aqueous polyurethane resin layer. An aqueous resin composition including an aqueous polyurethane resin can be obtained by, for example, urethanizing a polymer polyol compound and an organic polyisocyanate compound, optionally, together with a chain extender in a solvent inert to the reaction and having a high affinity for water to prepare a prepolymer, neutralizing the prepolymer, then dispersing the prepolymer in an aqueous solvent including a chain extender, and increasing the molecular weight. Examples of commercially available aqueous polyurethanes include "ADEKA BONTIGHTER " series manufactured by Asahi Denka Co., Ltd., "OLESTAR" series manufactured by Mitsui Toatsu Chemicals, Inc., "VONDIC" series and "HYDRAN" series manufactured by Dainippon Ink and Chemicals, Incorporated, "IMPR_ANIL" series manufactured by Bayer AG, "SOFLANNATE" series manufactured by Nippon Soflan Co., Ltd., "POIZ" series manufactured by Kao Corporation, "SANPLENE" series manufactured by Sanyo Chemical Industries Ltd., "AIZELAX" series manufactured by Hodogaya Chemical Co., Ltd., "SUPERFLEX" series manufactured by DKS Co. Ltd., and "NeoRez" series manufactured by Zeneca Co., Ltd..

A composition obtained by dispersing a terminated isocyanate prepolymer having a polyol such as a polyester polyol, a polyether polyol or a polycarbonate polyol as a basic skeleton and having an anionic group such as a carboxyl group and a sulfone group in an aqueous solvent is preferred as the aqueous resin composition including an aqueous polyurethane resin.

By coating and drying the above-described aqueous resin composition preferably on the surface of a dichroic pigment coating layer after the treatment with a silane coupling agent, it is possible to form an aqueous resin layer as an intermediate layer on the dichroic pigment coating layer. As a coating method, a known coating method such as a dipping method or a spin coating method can be used. The coating conditions may be appropriately set so as to enable the formation of an intermediate layer having a desired thickness. Regardless of whether the intermediate layer is an aqueous resin layer or not, from the viewpoint of effectively preventing or reducing peeling between the dichroic pigment coating layer and the photochromic layer, it is preferable that the thickness of the intermediate layer be 5-20 μm, and more preferably 7-10 μm. The intermediate layer may be composed of only one layer or two or more layers having different compositions. In the case where two or more layers are provided between the dichroic pigment coating layer and the photochromic layer, the thickness of the intermediate layer means the total thickness of two or more layers. Before the aqueous resin composition is coated, it is possible to treat the surface of the dichroic pigment coating layer, which is the surface to be coated, by one or more well-known surface treatment methods such as chemical treatment with e.g. acid, alkali or various organic solvents, physical treatment with e.g. plasma, ultraviolet light or ozone, and detergent treatment using various detergents.

By drying the aqueous resin composition after coating, it is possible to form the aqueous resin layer as an intermediate layer. This drying can be performed, for example, by placing a member including a dichroic pigment coating layer, on which the aqueous resin composition has been coated, for 5 min to 24 h in an atmosphere at room temperature to 100°C. The room temperature refers to the ambient temperature without temperature control such as heating and cooling and is generally 15-25°C, but it is not limited to this range and may vary depending on weather and season.

The aqueous resin layer has been described as a preferred embodiment of the intermediate layer, but the intermediate layer also may be, for example, a cured layer formed by curing the curable composition.

As compared with the spectacle lens obtained by the insert molding of the conventional polarizing film, the spectacle lens described above can expand the range of frame selection.

The present spectacles include the spectacle lens and a frame to which the spectacle lens is mounted.

The frame includes, for example, a pair of rims, a bridge provided between the rims, and a pair of temples provided at one end of the rim.

The rim may be a half rim. The spectacle lens according to one embodiment of the present invention can be used even with a frame having a half rim.

The frame may be a so-called rimless frame. In this case, for example, the spectacles have a pair of spectacle lenses, a bridge provided between the spectacle lenses, and a pair of temples provided at one end of the spectacle lens.

Examples

Hereinafter, the invention will be further described by examples.

[Example 1]

Preparation of Polarizing Lens

(1) Formation of Alignment Layer

A hard coat layer having a thickness of 2 μm was formed by using a meniscus-shaped polythiourethane lens (trade name EYAS, manufactured by HOYA Corporation, center thickness 2.0 mm, diameter 75 mm, convex surface curve (average value) about +0.8) as a lens substrate, preparing a hard coat composition according to the method described in (6) hereinbelow, coating the hard coat composition on the convex surface of the lens substrate by a spin coating method, heating for 120 min at a heating temperature of 90°C, and curing.
A $SiO_2$ film having a thickness of about 0.2 μm was formed on the hard coat layer by a vacuum deposition method.
Unidirectional rubbing treatment was performed with respect to the formed $SiO_2$ film by unidirectionally rotating a roller with nylon wrapped therearound while pressing the roller against the film with constant pressure. Thus, an alignment layer was formed on the convex surface of the lens substrate with the hard coat layer.

(2) Formation of Dichroic Pigment Coating Layer (2-1) Coating of an aqueous coating liquid for forming a dichroic pigment coating layer

After the drying, a coating liquid prepared by diluting a water-soluble dichroic pigment (trade name Varilight solution 2S manufactured by Sterling Optics Incorporated, an aqueous solution with an active ingredient concentration of about 4% by mass) with water to a dichroic pigment concentration of 0.28% by mass was coated by a spin coating method on the rubbed surface. Coating by the spin coating method was performed by supplying the coating liquid at a rotation speed of 285 rpm and holding for 40 sec.

(2-2) Water-insolubilization treatment

Next, an aqueous solution having a concentration of iron chloride of 0.15 M, a concentration of calcium hydroxide of 0.2 M, and pH 3.5 was prepared, and the lens obtained above was immersed in this aqueous solution for approximately 30 sec, pulled out, and washed thoroughly with pure water. Through this step, the water-soluble pigment was converted into a hardly soluble pigment.

(2-3) Silane coupling agent treatment

After the above (2-2), the lens was immersed in a 10% by mass aqueous solution of γ-aminopropyltriethoxysilane for 15 min, then washed with pure water three times, heat-treated in a heating furnace (furnace temperature 85°C) for 30 min, and then taken out from the heating furnace and cooled to room temperature.
After the cooling, the lens was immersed in a 2% by mass aqueous solution of γ-glycidoxypropyltrimethoxysilane for 30 min and then heat-treated in a heating furnace (furnace temperature 60°C) for 30 min. After the heat treatment, the lens was taken out from the heating furnace and cooled to room temperature.
After the silane coupling treatment, the thickness of the formed dichroic pigment coating layer was 1 μm.

(3) Formation of Aqueous Polyurethane Resin Layer

(Intermediate Layer)

An aqueous polyurethane resin layer having a thickness of about 7 μm was formed by coating an aqueous dispersion of a polyurethane having an acrylic group introduced into a polyurethane skeleton (polycarbonate polyol-based polyurethane emulsion, viscosity 100 mPa·s, solid content concentration 38% by mass) as an aqueous resin composition on the surface of the dichroic pigment coating layer obtained as described in (2) hereinabove by a spin coating method, and then air-drying for 15 min in an atmosphere at a temperature of 25°C and a relative humidity of 50%.

(4) Preparation of Curable Composition for Forming Photochromic Layer

A radically polymerizable composition including 20 pbm of trimethylolpropane trimethacrylate, 35 pbm of BPE oligomer (2,2-bis(4-methacryloyloxypolyethoxyphenyl)propane), 10 mass% of EB6A (polyester oligomer hexaacrylate), 10 pbm of polyethylene glycol diacrylate having an average molecular weight of 532, and 10 pbm of glycidyl methacrylate was prepared in a plastic container. A total of 3 pbm of chromene 1 as a photochromic pigment, 5 pbm of a piperidine

ring-containing compound (hindered amine (SANOL LS765, manufactured by Sankyo Co., Ltd. (bis (1,2,2,6,6-pentamethyl-4-piperidyl) sebacade, methyl (1,2,2,6,6-pentamethyl-4-piperidyl) sebacade, average molecular weight 467))), and 0.6 pbm of CGI-1870 (manufactured by BASF SE) as a UV polymerization initiator were added to 100 pbm of the radically polymerizable composition, followed by thorough stirring and mixing. A total of 6 pbm of γ-methacryloyloxypropyltrimethoxysilane (KBM 503, manufactured by Shin-Etsu Chemical Co., Ltd.) was added dropwise while stirring to the obtained composition.

Defoaming was thereafter performed for 2 min with a rotation-revolution type stirring and defoaming apparatus to obtain a curable composition for forming a photochromic layer.

(5) Formation of Photochromic Layer

The curable composition for forming a photochromic layer which was prepared in (4) hereinabove was coated on the aqueous polyurethane resin layer formed in (3) hereinabove by a spin coating method. This lens was then irradiated with ultraviolet rays having a wavelength of 405 nm with a UV lamp (D bulb) at an integrated quantity of light of 3240 $mJ/cm^2$ (180 $mW/cm^2$) for 3 min in a nitrogen atmosphere (oxygen concentration of ≤ 500 ppm), and then effect treatment was performed for 150 min at a heating temperature of 80°C to form a photochromic layer having a thickness of about 40 μm.

(6) Preparation of Hard Coat Composition

A total of 17 pbm of γ-glycidoxypropyltrimethoxysilane, 30 pbm of methanol, and 28 pbm of water-dispersed colloidal silica (solid content 40 mass%, average particle diameter 15 μm) were placed in a glass container equipped with a magnetic stirrer, thoroughly mixed, and stirred for 24 h at a flow temperature of 5°C. Next, 15 pbm of propylene glycol monomethyl ether, 0.05 pbm of a silicone type surfactant, and 1.5 pbm of aluminum acetylacetonate as a curing agent were added and thoroughly stirred, followed by filtration to prepare a hard coat composition.

(7) Formation of Hard Coat Layer

The hard coat composition prepared in (6) hereinabove was coated by a dipping method (pulling rate 20 cm/min) on the photochromic layer formed in (5) hereinabove, and then cured by heating for 120 min at a heating temperature of 90°C to form a hard coat layer having a thickness of 3 μm.

Through the above steps, a spectacle glass was obtained in which the hard coat layer, the alignment layer, the dichroic pigment coating layer (treated with a silane coupling agent), the aqueous polyurethane resin layer, the photochromic layer, and the hard coat layer were provided in this order on the lens substrate.

[Comparative Example 1]

A spectacle lens was obtained by the same method as in Example 1 except that the concentration of the dichroic pigment in the coating liquid was 0.46 mass%.

[Comparative Example 2]

A spectacle lens was obtained by the same method as in Example 1 except that the concentration of the dichroic pigment in the coating liquid was 1.04 mass%.

[Comparative Example 3]

A spectacle lens was obtained by the same method as in Example 1 except that the concentration of the dichroic pigment in the coating liquid was 1.72 mass%.

[Comparative Example 4]

A spectacle lens was obtained by the same method as in Example 1 except that the concentration of the dichroic pigment in the coating liquid was 2.84 mass%.

[Comparative Example 5]

A spectacle lens was obtained by the same method as in Example 1 except that the water-soluble dichroic

pigment (trade name Varilight solution 2S manufactured by Sterling Optics Incorporated, an aqueous solution with an active ingredient concentration of about 4 mass%) was used as it was, without dilution with water, to adjust the concentration of the dichroic pigment in the coating liquid to 4% by mass.

[Comparative Example 6]

A spectacle lens was obtained in the same manner as in Comparative Example 3 except that the aqueous coating liquid for forming a dichroic pigment coating layer was supplied at a rotation speed of 390 rpm.

[Comparative Example 7]

A spectacle lens was obtained in the same manner as in Comparative Example 3 except that the aqueous coating liquid for forming a dichroic pigment coating layer was supplied at a rotation speed of 420 rpm.

[Comparative Example 8]

A spectacle lens was obtained in the same manner as in Comparative Example 3 except that the aqueous coating liquid for forming a dichroic pigment coating layer was supplied at a rotation speed of 450 rpm.

[Example 2]

A spectacle lens was obtained in the same manner as in Example 1 except that the aqueous coating liquid for forming a dichroic pigment coating layer was supplied at a rotation speed of 390 rpm.

[Example 3]

A spectacle lens was obtained in the same manner as in Example 1 except that the aqueous coating liquid for forming a dichroic pigment coating layer was supplied at a rotation speed of 450 rpm.

Measurement Methods

Various measurements of the spectacle lenses prepared in the examples and comparative examples were performed by the following methods.

(1) Measurement of Luminous transmittance

The luminous transmittance was measured according to "6.6. Polarization Lens Test Method" of JIS T 7333:2005. Where a lens had a photochromic layer, the measurement was performed according to "6.6. Polarization Lens Test Method" after "a state with a light color" was obtained by the method prescribed in "6.5.3.1".

(2) Degree of Polarization

The degree of polarization ($P_{eff}$) was evaluated by the following formula by using an ultraviolet - visible - near-infrared spectrophotometer "V-660" (manufactured by JASCO Corporation) to determine a luminous transmittance ($T_{\parallel}$) at the time when the transmission axis of the polarizing element was in a parallel direction with respect to the linearly polarized light and a luminous transmittance ($T_{\perp}$) at the time when the transmission axis of the polarizing element was in the orthogonal direction according to ISO 8980-3. The luminous transmittance ($T_{\parallel}$) and the luminous transmittance ($T_{\perp}$) were measured using a visible spectrophotometer and a polarizer (Glan-Thompson prism). The measurement light was made incident from the lens convex surface side.

$$P_{eff}\ (\%) = [(T_{||} - T_{\perp})/(T_{||} + T_{\perp})] \times 100$$

The above results are shown in Table 1 (CE = Comparative Example).

[Table 1]

Table 1

| | Concentration of dichroic pigment (mass%) | Rotation speed (rpm) | Luminous transmittance (%) | Degree of polarization (%) |
|---|---|---|---|---|
| Example 1 | 0.28 | 285 | 82 | 19 |
| CE-1 | 0.46 | 285 | 55 | 51 |
| CE-2 | 1.04 | 285 | 49 | 65 |
| CE-3 | 1.72 | 285 | 41 | 86 |
| CE-4 | 2.84 | 285 | 35 | 97 |
| CE-5 | 4.00 | 285 | 33 | 99 |
| CE-6 | 1.72 | 390 | 50 | 69 |
| CE-7 | 1.72 | 420 | 52 | 65 |
| CE-8 | 1.72 | 450 | 54 | 59 |
| Example 2 | 0.28 | 390 | 85 | 16 |
| Example 3 | 0.28 | 450 | 85 | 15 |

From the comparison between the examples and comparative examples in Table 1, it was confirmed that a spectacle lens having a degree of polarization of 10-60% and a luminous transmittance of > 75% can be obtained by forming the dichroic pigment coating layer by coating a coating liquid including a dichroic pigment at a low concentration of < 0.3 mass% by a spin coating method at a rotation speed of 200-600 rpm.

Further, from the comparison of the group of Comparative Examples 3 and 6-8 and the group of Examples 1-3 in Table 1, it was confirmed that the lower the concentration of the dichroic pigment, the smaller is the effect produced by changes in the rotation speed on the degree of polarization and luminous transmittance.

The spectacle lens described above can be manufactured by the method of the present invention in which a dichroic pigment coating layer is formed on the rubbed surface of a lens substrate by coating a coating liquid including 0.04-0.35 mass% of a dichroic pigment by a spin coating method at a rotation speed of 200-600 rpm. Thus, by using the low-concentration coating liquid having a dichroic pigment content ratio of 0.04-0.35 mass%, it is possible to reduce variations in the degree of polarization for each manufacturing lot.

In addition, by coating the low-concentration dichroic pigment coating liquid on the rubbed surface, it is possible to maintain the degree of polarization for reducing the glare while, at the same, time realizing a high transmittance. Although the reason for this is not clear, it is conceivable that because the ratio of molecules of the dichroic pigment directly contacting the rubbed surface is increased, a remarkable influence on orientation is demonstrated from the rubbed surface, and it is considered that a comparatively strong degree of polarization is demonstrated while a high transmittance is realized by coating the low-concentration dichroic pigment.

The luminous transmittance in the spectacle lens can be improved by newly developing a material itself (for example, a dichroic pigment), but a disadvantage of newly developing a material itself is that it is costly and time-consuming. By contrast, according to the present invention, it is possible to improve the luminous transmittance of the spectacle lens by changing the manufacturing conditions while using the existing material.

Furthermore, according to the present invention, since a dichroic pigment coating layer is formed by coating a coating liquid including a dichroic pigment on a lens substrate, a shorter turnaround time can be realized and the range of frame selection can be expanded as compared with the technique disclosed in JP-A-2015-069045 using a polarizing film.

By providing a photochromic layer including a photochromic pigment, it is possible to obtain a spectacle lens having both polarization performance and dimming performance. Since a decrease in luminous transmittance due to the polarizing layer can be suppressed, a high luminous transmittance can be obtained even though the lens has dimming performance, so that sufficient dimming performance can be obtained while maintaining a high luminous transmittance at the time of color fading.

## Claims

1. A method for producing a spectacle lens which

- has a degree of polarization of 10-60% and a luminous transmittance of > 75%, and
- comprises a lens substrate and a dichroic pigment coating layer directly on the lens substrate or on the lens substrate via another layer,

wherein the dichroic pigment layer is formed by spin coating onto a rubbed surface a coating liquid, **characterized in that** the content of the dichroic pigment in the coating liquid is 0.04-0.35 mass%.

2. The method of claim 1, wherein the spectacle lens comprises, on at least one surface side of the lens substrate, the dichroic pigment coating layer; and a photochromic layer including a photochromic pigment.

3. The method of claim 2, wherein the spectacle lens further comprises an intermediate layer provided between the dichroic pigment coating layer and the photochromic layer.

4. The method of claim 3, wherein the spectacle lens comprises the dichroic pigment coating layer, the intermediate layer, and the photochromic layer in this order from the lens substrate side.

5. The method of claim 4, wherein the spectacle lens further comprises a functional layer on the photochromic layer.

6. The method of any of claims 1-5, wherein the spectacle lens comprises an alignment layer including silicon oxide, between the lens substrate and the dichroic pigment coating layer.

7. The method of claim 3, wherein an interface of the dichroic pigment coating layer on the intermediate layer side is a surface subjected to a silane coupling agent treatment.

8. The method of any of claims 1-7, wherein at least one surface of the lens substrate is a convex surface.

**Patentansprüche**

1. Verfahren zur Herstellung eines Brillenglases, das

- einen Polarisationsgrad von 10-60% und eine Lichtdurchlässigkeit von > 75% aufweist, und
- ein Linsensubstrat und eine dichroitische Pigmentdeckschicht direkt auf dem Linsensubstrat oder auf dem Linsensubstrat über eine andere Schicht umfasst,

wobei die dichroitische Pigmentschicht durch Rotationsbeschichten einer Beschichtungsflüssigkeit auf eine geriebene Oberfläche gebildet wird, **dadurch gekennzeichnet, dass** der Gehalt des dichroitischen Pigments in der Beschichtungsflüssigkeit 0,04-0,35 Massen-% beträgt.

2. Verfahren nach Anspruch 1, bei dem das Brillenglas auf mindestens einer Oberflächenseite des Linsensubstrats die dichroitische Pigmentdeckschicht und eine photochrome Schicht mit einem photochromen Pigment umfasst.

3. Verfahren nach Anspruch 2, bei dem das Brillenglas ferner eine Zwischenschicht umfasst, die zwischen der dichroitischen Pigmentdeckschicht und der photochromen Schicht angeordnet ist.

4. Verfahren nach Anspruch 3, bei dem das Brillenglas die dichroitische Pigmentdeckschicht, die Zwischenschicht und die photochrome Schicht in dieser Reihenfolge von der Seite des Linsensubstrats aus umfasst.

5. Verfahren nach Anspruch 4, bei dem das Brillenglas ferner eine Funktionsschicht auf der photochromen Schicht umfasst.

6. Verfahren nach mindestens einem der Ansprüche 1-5, bei dem das Brillenglas eine Ausrichtungsschicht, die Siliziumoxid einschließt, zwischen dem Linsensubstrat und der dichroitischen Pigmentdeckschicht umfasst.

7. Verfahren nach Anspruch 3, bei dem eine Grenzfläche der dichroitischen Pigmentdeckschicht auf der Seite der Zwischenschicht eine Oberfläche ist, die einer Behandlung mit einem Silan-Kupplungsmittel unterzogen wurde.

8. Verfahren nach mindestens einem der Ansprüche 1 bis 7, bei dem mindestens eine Oberfläche des Linsensubstrats

eine konvexe Oberfläche ist.

## Revendications

1. Procédé de fabrication d'un verre de lunettes qui

   - a un degré de polarisation de 10 à 60 % et un facteur de transmission lumineuse > 75 %, et
   - comprend un substrat de verre et une couche de revêtement de pigment dichroïque directement sur le substrat de verre ou sur le substrat de verre par l'intermédiaire d'une autre couche, dans lequel la couche de pigment dichroïque est formée par dépôt par centrifugation sur une surface frottée d'un liquide de revêtement,

   **caractérisé en ce que**
   la teneur du pigment dichroïque dans le liquide de revêtement est de 0,04 à 0,35 % en masse.

2. Procédé de la revendication 1, dans lequel le verre de lunettes comprend, sur au moins un côté de surface du substrat de verre, la couche de revêtement de pigment dichroïque ; et une couche photochromique comportant un pigment photochromique.

3. Procédé selon la revendication 2, dans lequel le verre de lunettes comprend en outre une couche intermédiaire disposée entre la couche de revêtement de pigment dichroïque et la couche photochromique.

4. Procédé selon la revendication 3, dans lequel le verre de lunettes comprend la couche de revêtement de pigment dichroïque, la couche intermédiaire, et la couche photochromique dans cet ordre à partir du côté substrat de verre.

5. Procédé selon la revendication 4, dans lequel le verre de lunettes comprend en outre une couche fonctionnelle sur la couche photochromique.

6. Procédé selon l'une quelconque des revendications 1 à 5, dans lequel le verre de lunettes comprend une couche d'alignement comportant de l'oxyde de silicium, entre le substrat de verre et la couche de revêtement de pigment dichroïque.

7. Procédé selon la revendication 3, dans lequel une interface de la couche de revêtement de pigment dichroïque du côté de la couche intermédiaire est une surface soumise à un traitement avec un agent de couplage au silane.

8. Procédé selon l'une quelconque des revendications 1 à 7, dans lequel au moins une surface du substrat de verre est une surface convexe.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5555688 B
- JP 2015069045 A
- EP 2808711 A
- US 2005151926 A
- JP 2012032507 A
- US 2400877 A
- US 2002527786 W